## Europäisches Patentamt
## European Patent Office
## Office européen des brevets

(19)

(11) Numéro de publication: **0 011 015**
**B1**

(12) **FASCICULE DE BREVET EUROPEEN**

(45) Date de publication du fascicule du brevet: **21.04.82**

(51) Int. Cl.³: **H 04 L 27/18, H 04 B 7/17**

(21) Numéro de dépôt: **79400772.4**

(22) Date de dépôt: **19.10.79**

(54) **Répéteur hertzien numérique à régénération et réseau de transmission comportant de tels répéteurs.**

(30) Priorité: **31.10.78 FR 7830850**

(43) Date de publication de la demande:
**14.05.80 Bulletin 80/10**

(45) Mention de la délivrance du brevet:
**21.04.82 Bulletin 82/16**

(84) Etats contractants désignés:
**DE GB IT NL SE**

(56) Documents cités:
**US - A - 2 369 268**
**US - A - 3 603 882**

**IEEE INTERNATIONAL CONFERENCE ON COMMUNICATIONS: PHILADELPHIA, vol. 2, juin 14—16, 1976 New York, US GIGER et al. "3A-RDS 11GHz Digital Radio System", pages 18—1 à 18—8.**
**IEEE INTERNATIONAL CONFERENCE ON COMMUNICATIONS, TORONTO, vol. 2, juin 4—7, 1978, New York, US**

(73) Titulaire: **THOMSON-CSF**
**173, Boulevard Haussmann**
**F-75360 Paris Cedex 08 (FR)**

(72) Inventeur: **Huriau, Alain**
**"THOMSON-CSF" - SCPI 173, bld Haussmann**
**F-75360 Paris Cedex 08 (FR)**

(74) Mandataire: **Courtellemont, Alain et al,**
**"THOMSON-CSF" - SCPI 173, bld Haussmann**
**F-75360 Paris Cedex 08 (FR)**

(56) Documents cités:
**Y. TAN et al. "2-GHZ Band Digital Radio Equipment Employing 8-Level PSK With Cosine Roll-Off Spectrum Shaping", pages 33.3.1 à 33.3.5.**
**JAPANESE TELECOMMUNICATIONS REVIEW, vol. 20, 1978, no. 1 Tokyo (JP).**
**SATO et al. "100 Mbits/s Digital Radio Relay systems in 11 and 15 GHz Bands", pages 40—49.**

Répéteur hertzien numérique à régenération et réseau de transmission comportant de tels répéteurs

La présente invention concerne les répéteurs hertziens numériques à régénération et plus particulièrement ceux permettant de constituer des liaisons où la transmission de signaux d'exploitation doit être assurée à travers les répéteurs.

Il est bien connu que les liaisons numériques de bonne qualité, et particulièrement les liaisons longues comportant de nombreux répéteurs, obligent à réaliser dans ces derniers, ou au moins une partie d'entre eux, une régénération du train binaire transmis, qui est donc précédée d'une démodulation, et suivie d'une modulation en fréquence intermédiaire.

Les signaux d'exploitation sont reçus à chaque station répéteur et chacune d'elles doit pouvoir en émettre; ceci est obtenu par une modulation et une démodulation auxiliaire du porteur haute fréquence qui doivent être opérées bond par bond à cause de la discontinuité haute fréquence provoquée par la régénération. De plus un générateur de porteur à frèquence intermédiaire doit être prévu à chaque bond pour réaliser la modulation du train binaire. Il en résulte une complication des équipements et une diminution de leur fiabilité.

La présente invention a pour but de pallier ces inconvénients et d'assurer la transparence des répéteurs aux signaux d'exploitation en transit.

Selon l'invention, un répéteur hertzien transmettant un signal porteur modulé en phase par un signal numérique, et angulairement par des signaux d'exploitation, comportant en série: un démodulateur de phase à circuit de récupération de porteuse, un dispositif de régénération du signal numérique, et un modulateur de phase, est caractérisé en ce que la bande passante du circuit de récupération de porteuse est au moins égale au spectre de fréquence dû à la modulation angulaire par les signaux d'exploitation et en ce que le signal porteur récupéré est appliqué au modulateur pour le moduler en phase par le signal numérique régénéré.

L'invention sera mieux comprise et d'autres caractéristiques apparaîtront à l'aide de la description ciaprès et des dessins s'y rapportant sur lesquels:
— la figure 1 est un schéma général d'un répéteur hertzien selon l'invention;
— la figure 2 est un mode de réalisation préféré du répéteur de la figure 1.

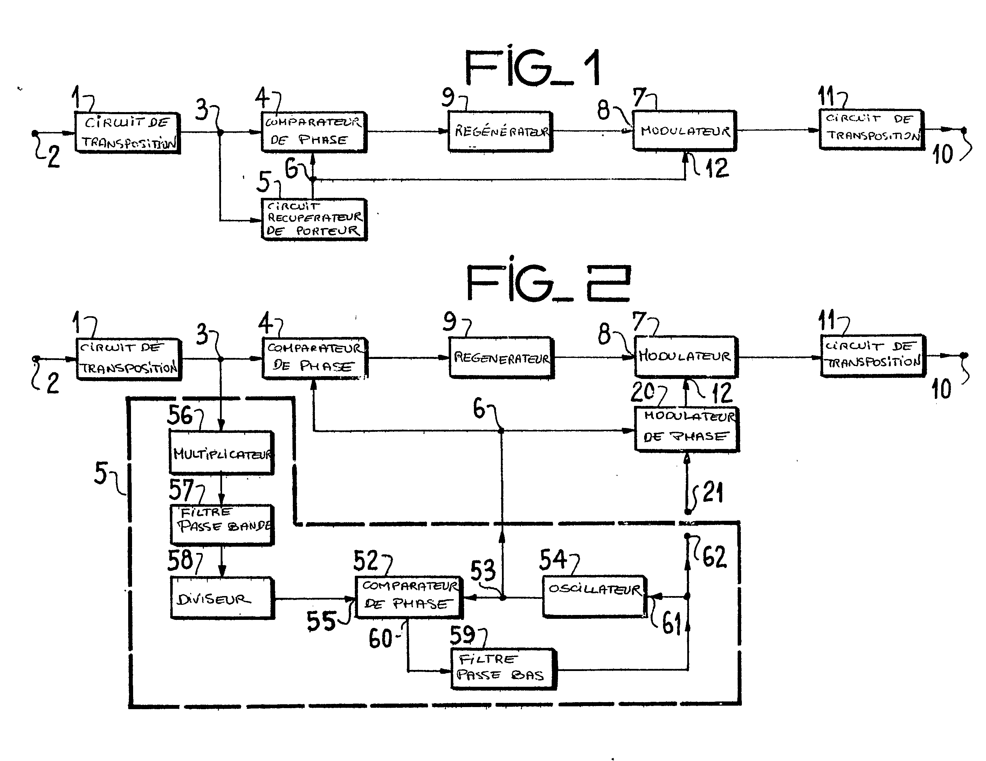

Sur la figure 1 un circuit de transposition et d'amplification à fréquence intermédiaire 1 reçoit sur une borne d'entrée 2 les signaux captés par un aérien (non représenté). Sa sortie 3 est connectée à une première entrée d'un dispositif de comparaison de phase 4 et à un circuit récupérateur de porteur 5. La sortie 6 de ce dernier est reliée à une deuxième entrée du dispositif 4 et à l'entrée du signal porteur 12 d'un modulateur 7 dont l'entrée de modulation 8 est connectée à la sortie du dispositif 4 à travers un régénérateur 9. La sortie du modulateur 7 est connectée à la sortie du répéteur 10 à travers un circuit de transposition et d'amplification à haute fréquence 11.

Le dispositif 4 et le circuit 5 constituent un démodulateur de phase à récupération de porteuse tel qu'en comporte un répéteur de faisceau hertzien numérique classique. Mais les dispositions décrites se différencient de l'art connu par l'utilisation de la porteuse récupérée sur la borne 6 comme signal porteur à destination du modulateur 7 qui reconstitute le signal modulé en fréquence intermédiaire à partir du train binaire régénéré dans le dispositif 9.

Cette dernière disposition évite donc l'habituel générateur de signal à fréquence intermédiaire et assure en outre la transparence du répéteur aux signaux de service transmis par une modulation angulaire auxiliaire de la porteuse du signal reçu.

En effet, supposons que le signal reçu soit modulé en phase avec huit états de phase par le train binaire d'information à transmettre, et modulé en outre angulairement par des signaux d'exploitation. Il suffit de prévoir que cette modulation angulaire auxiliaire ait un indice de crête très nettement inférieur à $2\pi/8$ radian et que la bande passante du circuit 5 soit au moins égale au spectre de fréquence dû à cette modulation angulaire et très inférieure à la fréquence du rythme du train numérique d'information, pour que la démodulation de ce dernier par le dispositif 4 soit correctement assurée et que le signal porteur appliqué en 12 au modulateur 7 comporte la modulation angulaire auxiliaire d'origine, qui se retrouvera donc à la sortie 10 du répéteur.

Un mode préféré de réalisation est montré par la figure suivante.

Sur la figure 2 où tous les repères égaux à ceux de la figure 1 concernent des organes identiques, la sortie 6 du circuit 5 alimente l'entrée de signal porteur 12 à travers un modulateur de phase 20 ayant une entrée de modulation 21. En outre le circuit de récupération de porteur 5 comporte un comparateur de phase 52 dont une première entrée 53 est connectée à la sortie d'un oscillateur 54 ainsi qu'à la borne de sortie 6 du circuit 5, et une deuxième entrée 55 connectée à l'entrée du circuit 5, dans le sens de parcours des signaux, à travers un multiplicateur 56, un filtre 57 et un diviseur 58 montés en série. Il comporte également un filtre passe bas 59 inséré entre la sortie 60 du comparateur 52 et l'entrée de commande électrique en fréquence 61 de l'oscillateur 54, cette entrée 61 étant également connectée à la borne de sortie de modulation 62.

Les signaux appliqués à l'entrée 2 sont supposés être un signal porteur modulé en phase, à quatre états, par un train numérique, et analogiquement par des signaux d'exploitation dont la fréquence transmise la plus élevée est de 52 KHz, l'indice de modulation crête étant de $\pm\pi/12$ radian. Le dispositif 4 et le circuit 5 constituent ici un démodulateur cohérent à 4 états de phase. Le multiplicateur 56 et le diviseur 58 ont un même coefficient, égal à 4 et le filtre 57 une bande passante d'environ 140 KHz, correspondant à la bande de Carson de la modulation auxiliaire.

Ainsi le signal reçu à l'entrée 55 du comparateur 52 ne comporte plus la modulation principale quadriphase puisque les sauts de phase se trouvent tous transformés en des variations de phase égales à des multiples de 360°, mais la modulation analogique par les signaux d'exploitation est intégralement transmise et se trouve donc imprimée au signal de sortie du générateur à fréquence intermédiaire 54 par l'action de la boucle d'asservissement dont le filtre 59 transmet intégralement le spectre des fréquences des signaux d'exploitation reçus. Ces derniers sont recueillis pour exploitation locale sur la borne de sortie 62. La transmission locale de ces signaux est assurée par le modulateur de phase 20 à travers son entrée de modulation 21, le niveau appliqué devant être ajusté afin de ne pas dépasser l'indice de modulation crête global de $\pi/12$ radian. En variante, cette transmission pourrait être tout aussi bien assurée par une modulation de phase de l'oscillatuer local du convertisseur inclus dans les circuits 11 pour transposer le signal à fréquence intermédiaire sur la fréquence d'émission finale.

On remarquera que les dispositions décrites présentent l'avantage d'économiser un démodulateur propre aux signaux d'exploitation, associé à un coupleur des signaux locaux réinjectés, ainsi qu'un générateur de signal à fréquence intermédiaire, tout en assurant la transmission des signaux d'exploitation en cas de panne du dispositif de régénération du train numérique.

Il en résulte un prix de revient diminué et une fiabilité accrue par rapport aux répéteurs numériques connus.

## Revendications

1. Répéteur hertzien transmettant un signal porteur modulé en phase à n états de phase, par un signal numérique, et angulairement par des signaux d'exploitation, et comportant en série: un démodulateur de phase (4, 5), un dispositif régénérateur du signal numérique (9), et un modulateur de phase (7) ayant une entrée (12) de signal porteur, le démodulateur de phase étant du type comportant: un dispositif de comparaison de phase (4) ayant une première entrée (3) recevant le signal porteur modulé et une seconde entrée (6), un circuit de récupération de porteuse (5) ayant une entrée et une sortie respectivement couplées à la première et à la seconde entrée de dispositif comparateur, le répéteur étant caractérisé en ce que la sortie (6) du circuit de récupération (5) est couplée à l'entrée (12) de signal porteur du modulateur (7), la bande passante du circuit de récupération de porteuse (5) étant au moins égale au spectre de fréquence dû à la modulation angulaire par les signaux d'exploitation et très inférieure à la fréquence du rythme du signal numérique, et l'indice de crête de cette modulation angulaire étant nettement inférieur à $2\pi/n$.

2. Répéteur hertzien selon la revendication 1, caractérisé en ce que le circuit de récupération (5) comporte un comparateur de phase (52) ayant une première et une seconde entrée (55 et 53) respectivement couplées à l'entrée et à la sortie du circuit, et un oscillateur (54) à commande électronique en fréquence ayant une sortie couplée à la seconde entrée (53) du comparateur et une entrée de commande (61) couplée à la sortie (6) du comparateur à travers un filtre passe bas (59) ayant pour fréquence de coupure la fréquence maximale des signaux d'exploitation, l'entrée de commande (61) étant en outre couplée à une borne (62) de sortie supplémentaire du circuit, pour fournir les signaux d'exploitation modulant le signal porteur reçu par le répéteur.

3. Répéteur hertzien selon la revendication 2, caractérisé en ce que l'entrée (3) du circuit de récupération (5) est couplée à la première entrée (55) du comparateur de phase (52) à travers un dispositif de filtrage comprenant en série un multiplicateur par n (56), un filtre de bande (57) et un diviseur par n (58), la largeur de bande du filtre de bande étant sensiblement égale à la bande de Carson de la modulation angulaire du signal porteur par les signaux d'exploitation.

4. Répéteur hertzien selon l'une des revendications 2 ou 3, caractérisé en ce que n est égal à 4, la modulation angulaire étant une modulation de phase dont l'indice de crête est nettement inférieur à $\pi/2$.

5. Réseau de transmission numérique comportant au moins un répéteur hertzien selon l'une quelconque des revendications 1 à 4.

## Patentansprüche

1. Hertzsche Relaisstation, die ein Trägersignal überträgt, welches mit n Phasenzuständen durch ein Digitalsignal phasenmoduliert und durch Betriebssignale winkelmoduliert ist, mit in Reihenschaltung: einem Phasendemodulator (4, 5), einer Vorrichtung (9) zum Regenerieren des Digitalsignals und einem Phasenmodulator (7), der einen Trägersignaleingang (12) aufweist, wobei der Phasendemodulator derart ist, daß er enthält: eine Phasenvergleichervorrichtung (4), deren erster Eingang (3) das modulierte Trägersignal empfängt und die einen zweiten Eingang (6) aufweist, eine Trägerrückgewinnungsschaltung (5) mit einem Eingang und einem Ausgang, die an den ersten bzw. en den zweiten Eingang der Vergleichervorrichtung angekoppelt sind, wobei die Relaisstation dadurch gekennzeichnet ist, daß der Ausgang (6) der Rückgewinnungsschaltung (5) an den Trägersignaleingang des Modulators (7) angekoppelt ist, wobei das Durchlaßband der Trägerrückgewinnungsschaltung (5) wenigstens gleich dem Frequenzspecktrum ist, das auf die Winkelmodulation durch die Betriebssignale zurückzuführen ist, und wesentlich geringer als die Rhythmusfrequenz des Digitalsignals ist, und wobei der Spitzenindex dieser Winkelmodulation geringer ist als $2\pi/n$.

2. Hertzsche Relaisstation nach Anspruch 1, dadurch gekennzeichnet, daß die Rückgewinnungsschaltung (5) einen Phasenkomparator (52) mit einem ersten und einem zweiten Eingang (55 und 53) aufweist, die an den Eingang bzw. an den Ausgang der Schaltung angekoppelt sind, und einen elektronisch frequenzgesteuerten Oszillator (54) umfaßt, der einen an den zweiten Eingang (53) des Komparators angekoppelten Ausgang und einen Steuereingang (61) aufweist, der an den Ausgang (60) des Komparators über ein Tiefpaßfilter (59) angekoppelt ist, dessen Grenzfrequenz die maximale Frequenz der Betriebssignale ist, wobei der Steuereingang (61) ferner an einen weiteren Ausgangsanschluß (62) der Schaltung angekoppelt ist, um die das von der Relaisstation empfangene Trägersignal modulierenden Betriebssignale zu liefern.

3. Hertzsche Relaisstation nach Anspruch 2, dadurch gekennzeichnet, daß der Eingang (3) der Rückgewinnungsschaltung (5) an den ersten Eingang (55) des Phasenkomparators (52) über eine (Filtervorrichtung angekoppelt ist, die in Reihe geschaltet einen Multiplizierermit-n (56), ein Bandfilter (57) und einen Teiler-durch-n (58) enthält, wobei die Bandbreite des Bandfilters im wesentlichen gleich dem Carson-Band der Winkelmodulation des Trägersignals durch die Betriebssignale ist.

4. Hertzsche Relaisstation nach Anspruch 2 oder 3, dadurch gekennzeichnet, daß n gleich 4 ist und die Winkelmodulation eine Phasenmodulation ist, deren Spitzen-index wesentlich kleiner als $\pi/2$ ist.

5. Digitales Übertragungsnetz mit wenigstens einer Hertzschen Relaisstation nach einem der Ansprüche 1 bis 4.

**Claims**

1. Hertzian repeater transmitting a carrier signal phase-modulated by a digital signal with n phase states and angularly modulated by exploitation signals, and comprising in series: a phase demodulator (4, 5), a digital signal regenerator device (9) and a phase modulator (7) having a carrier signal input (12), the phase demodulator being of the type comprising: a phase comparator device (4) having a first input (3) receiving the modulated carrier signal and a second input (6), a carrier recovery circuit (5) having an input and an output coupled to the first and second inputs of the comparator device, respectively, the repeater being characterized in that the output (6) of the recovery circuit (5) is coupled to the carrier signal input of the modulator (7), the path band of the carrier recovery circuit (5) being at least equal to the frequency spectrum due to the angular modulation by the exploitation signals and much smaller than the rhythm, frequency of the digital signal, the peak index of this angular modulation being much less than $2\pi/n$.

2. Hertzian repeater in accordance with claim 1, characterized in that the recovery circuit (5) comprises a phase comparator (52) having a first and a second input (55 and 53) coupled to the input and the output of the circuit, respectively, and an oscillator (54) having electronic frequency control and having an output coupled to the second input (53) of the comparator and a control input (61) coupled to the output (60) of the comparator through a low pass filter (59) having a cut off frequency of the maximum frequency of the exploitation signals, the control input (61) being further coupled to another output terminal (62) of the circuit to provide the exploitation signals modulating the carrier signal received by the repeater.

3. Hertzian repeater in accordance with claim 2, characterized in that the input (3) of the recovery circuit (5) is coupled to the first input (55) of the phase comparator (52) through a filter device comprising, in series, a multiplicator by n (56), a band filter (57) and a divider by n (58), the band width of the band filter being substantially equal to the Carson band of the angular modulation of the carrier signal by the exploitation signals.

4. Hertzian repeater in accordance with any of claims 2 and 3, characterized in that n is equal to 4, the angular modulation being a phase modulation the peak index of which is much smaller than $\pi/2$.

5. Digital transmission network comprising at least one Hertzian repeater in accordance with any of claims 1 to 4.

## FIG_1

## FIG_2